# EUROPEAN PATENT APPLICATION

(11) **EP 4 782 332 A1**
(43) Date of publication of application: **29.07.2026**
(21) Application number: 25305115.5
(22) Date of filing: 28.01.2025
(51) Int. Cl.: B64C 9/02, F16H 25/20

(54) **ACTUATOR**

(71) Applicant: Goodrich Actuation Systems SAS, 27950 Saint-Marcel (FR)
(72) Inventor: MEDINA, Raphael, 27950 Saint-Marcel (FR); POTIER, Karl, 27950 Saint-Marcel (FR)
(74) Representative: Casalonga

(57) **Abstract**

An actuator for an aircraft control surface, the actuator comprising: first, second and third movable elements, wherein the third movable element is in screw engagement with the first movable element with a first lead , wherein the third movable element is in screw engagement with the second movable element with a second lead, wherein the first lead is different from the second lead to provide a reduction ratio between the first and second movable elements; wherein a motor engaging component of the first, second and third movable elements and third movable element is connectable to a motor such that the motor rotates the first component in use, wherein an aircraft control surface engaging component of the first, second and third moveable elements is connectable to the aircraft control surface to move the aircraft control surface on rotation of the motor engaging component in use.

## Description

### FIELD OF THE INVENTION

This application relates to an actuator and an aircraft control system.

### BACKGROUND

In aircraft control systems there may be high power (e.g. with associated high force and/or speed) requirements when moving an aircraft control surface, particularly those where external loads act on the aircraft control surface or where the aircraft control surface is required to respond quickly. There is a desire to reduce the force and/or speed requirements for motors used in such aircraft control systems.

### SUMMARY

According to a first aspect there is provided an actuator for an aircraft control surface, the actuator comprising: first, second and third movable elements, wherein the third movable element is in screw engagement with the first movable element with a first lead, wherein the third movable element is in screw engagement with the second movable element with a second lead, wherein the first lead is different from the second lead to provide a reduction ratio for the actuator. A motor engaging component of the first, second and third movable elements is connectable to a motor such that the motor rotates the first component in use. An aircraft control surface engaging component of the first, second and third moveable elements is connectable to the aircraft control surface to move the aircraft control surface on rotation of the motor engaging component in use.

By providing a reduction ratio for the actuator using the screw engagements of different leads, it may be easier to size the motor and/or a forcing element (as described below), particularly where high forces or speeds are required when moving the aircraft control surface.

The actuator may further comprise a forcing element configured to apply a force to a forcing element engaging component of the first, second and third moveable elements.

The forcing element engaging component may be the first movable element.

The forcing element may be configured to apply a force between the first movable element and one of the second and third movable elements.

The forcing element may be configured to apply a force between the first movable element and a stator.

The forcing element may be a bias element. The forcing element may be a spring. The forcing element may be a linear spring. The forcing element may be a torsion spring.

The bias element may be configured such that the aircraft control surface is biased towards a retracted position. An external load in use may force the aircraft control surface towards a deployed position.

The first movable element may comprise a first threaded component. The second movable element may comprise a second threaded component.

The first threaded component and the second threaded component may be threaded in the same direction.

The first threaded component and the second threaded component may be threaded in opposing directions.

The third movable element may be in roller screw engagement with the first and second movable elements.

The motor engaging component may be the third movable element.

The aircraft control surface engaging component may be the second movable element.

The forcing element engaging component may be the first movable element.

The motor engaging component may be the third movable element, the aircraft control surface engaging component may be the second movable element and the forcing element engaging component may be the first movable element.

The motor engaging component may be the first movable element.

The aircraft control surface engaging component may be the third movable element.

The forcing element engaging component may be the first movable element.

The forcing element engaging component may be the motor engaging component.

The motor engaging component may be the first movable element, the aircraft control surface engaging component may be the third movable element and the forcing element engaging component may be the first movable element.

The first lead and the second lead may be similar but not identical. In examples, | first lead - second lead | / second lead < 0.5. In examples, | first lead - second lead | / second lead < 0.4. In examples, | first lead - second lead | / second lead < 0.3. In examples, | first lead - second lead | / second lead < 0.2. In examples, | first lead - second lead | / second lead < 0.1.

According to a second aspect there is provided an aircraft control system comprising: the actuator described above; a motor connected to the motor engaging component; and an aircraft control surface connected to aircraft control surface engaging component. The actuator of the aircraft control system may comprise any of the features described with respect to the first aspect.

### BRIEF DESCRIPTION OF THE DRAWINGS

Various examples will now be described with reference to the accompanying drawings in which:
Fig. 1 shows a schematic of a first actuator.
Fig. 2 shows a schematic of a second actuator.
Fig. 3 shows a schematic of a third actuator.

### DETAILED DESCRIPTION

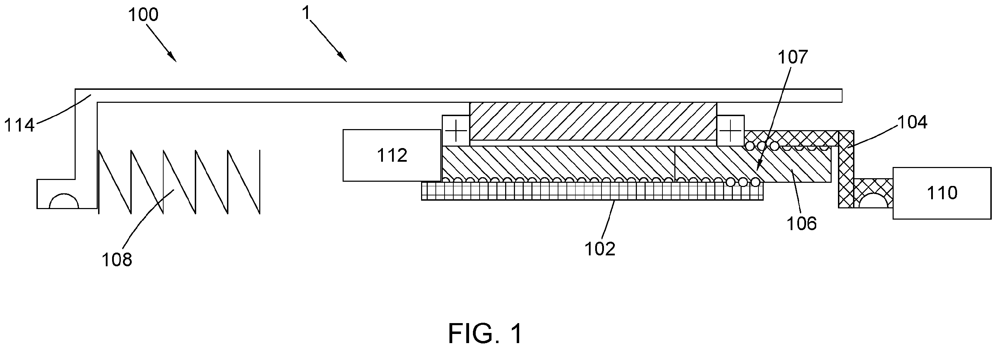

Fig. 1 shows a first actuator 100. The first actuator 100 comprises a first movable element 102. The first actuator 100 comprises a second movable element 104. The first actuator 100 comprises a third movable element 106. In relation to the first, second and third movable elements 102, 104,106, it will be understood that in some examples not all of the movable elements 102 , 104, 106 are "movable" in an absolute sense, with "movable" instead referring to relative movements between the movable elements 102, 104, 106.

In the first actuator 100, the third movable element 106 is constrained such that linear displacement of the third movable element 106 is prevented, but rotational displacement of the third movable element 106 is permitted. The first and second movable elements 102 104 are constrained such that rotational displacement of the first and second movable elements 102 104 is prevented, but linear displacement of the first and second movable elements 102 104 is permitted.

The third movable element 106 is in screw engagement with the first movable element 102 with a first lead. The third movable element 106 is in screw engagement with the second movable element 104 with a second lead.

"Screw engagement" between two components means that relative rotational displacement between the components may cause relative translational displacement between the components and/or relative translational displacement between the components may cause relative rotational displacement between the components. For a screw engagement a "lead" may be defined as the translational displacement of a movable element per turn of a threaded component.

In the first actuator 100, the first and second movable elements 102 104 comprise first and second threaded components respectively. In the first actuator 100, the first and second threaded components are ball screws. The third movable element 106 comprises a threaded shaft 107 configured to engage the first and second threaded components to provide the screw engagement with each of the first and second movable elements 102 104. In other examples the screw engagements may be via roller screw and/or lead screws rather than ball screw(s).

In the first actuator 100, the first and second movable elements 102 104 are configured to move in opposing directions. This is achieved by the first threaded component of the first movable element 102 and the second threaded component of the second movable element 104 being threaded in opposing directions. More specifically, the first movable element 102 has a right-handed thread and the second moveable element 104 has a left-handed thread. In this way, displacement of the third movable element 106 causes the first and second movable elements 102 104 to move in opposing directions.

The first actuator 100 is comprised in an aircraft control system 1, which further comprises a motor 112 (which may be any suitable drive component) and an aircraft control surface 110.

One of the first, second and third movable elements 102 104 106 is a motor engaging component 106. In the first actuator 100, the motor engaging component 106 is the third movable element 106. The motor engaging component is connected to the motor 112, such that rotation of the motor causes rotation of the third movable element 106.

One of the first, second and third movable elements 102 104 106 is an aircraft control surface engaging component 104. In the first actuator 100, the aircraft control surface engaging component 104 is the second movable element 104. The aircraft control surface engaging component 104 is connected to the aircraft control surface 110, such that displacement of the aircraft control surface engaging component 104 causes displacement of the aircraft control surface 110 in use.

In the first actuator 100, the aircraft control surface 110 is movable between a retracted position and a deployed position. Additionally, in the first actuator 100, the aircraft control system 1 is configured such that, in use, external loads (e.g. caused by airflow over a wing in which the aircraft control surface 110 is comprised) force the aircraft control surface towards the deployed position.

The first actuator 100 comprises a forcing element 108. In the first actuator 100, the forcing element 108 is a bias element 108, more specifically a spring 108, more specifically a linear spring 108. In the first actuator 100, the forcing element 108 biases the aircraft control surface 110 (via the movable elements) against the external loads i.e. towards the deployed position.

One of the first, second and third movable elements 102 104 106 is a forcing element engaging component 102. In the first actuator 100, the forcing element engaging component 102 is the first movable element 102. The forcing element 108 is configured to apply a force to the forcing element engaging component 102.

The first actuator 100 comprises a housing 114. The housing 114 contains various components of the first actuator 100. The housing 114 acts as a stator, with the forcing element 108 applying a force between the forcing element engaging component (in the first actuator 100 the first movable element 102) and the housing 114 i.e. with the linear spring being compressed between these components in use.

The first lead is different from the second lead. More specifically, in the first actuator 100, the first lead is greater than the second lead. This provides a reduction ratio for the actuator. As explained below, in the first actuator 100, the reduction ratio is greater than 1, more specifically, the reduction ratio is substantially 2.

In the first actuator 100, in order to provide different leads the first movable element 102 and the second movable element 104 are threaded with different pitches. More specifically, the first movable element 102 has a first pitch that is greater than a second pitch of the second movable element 104, more specifically, the first pitch is double the second pitch, more specifically, the first pitch is 24mm and the second pitch is 12 mm.

In the first actuator 100, the reduction ratio for the actuator is a reduction ratio between the first movable element 102 and the second movable element 104. In this example, this provides a reduction ratio between the forcing element engaging component 102 and the aircraft control surface engaging component 104, and, consequently, between the forcing element 108 and the aircraft control surface 110 in use. The reduction ratio in the first actuator 100 may be defined as the ratio of a load applied by the aircraft control surface engaging component 104 (to the aircraft control surface 110) to the load provided to the forcing element engaging component 102 (by the forcing element 108). As mentioned above, in the first actuator 100, the reduction ratio is greater than 1, more specifically, the reduction ratio is substantially 2.

Because the reduction ratio is greater than 1, the displacement of the forcing element 108 is greater than the displacement of the aircraft control surface 110 in use. This may reduce the force required by the forcing element 108 and/or by the motor 112, which may help in sizing these components, particularly when there are large external loads acting on the aircraft control surface 110 or where rapid movement of the aircraft control surface 110 is required.

In use, in order to move the aircraft control surface 110 from the deployed position to the retracted position (i.e. to the left in figure 1) the motor 112 rotates, which in turn causes rotation of the motor engaging component 106 (i.e. the third movable element 106). Rotation of the motor engaging component 106 (i.e. the third movable element 106) causes linear movement (to the left in figure 1) of the aircraft control surface engaging component 104 (i.e. the second movable element 104), which causes movement of the aircraft control surface 110 towards the retracted position.

Rotation of the motor engaging component 106 (i.e. the third movable element 106) causes linear movement (to the right in figure 1) of the forcing element engaging component 102 (i.e. the first movable element 102) in a direction which opposes the linear movement of the aircraft control surface engaging component 104 (i.e. the second movable element 104).

As the forcing element engaging component 102 moves in this way, the forcing element 108 provides a force to it, which helps to drive the forcing element engaging component 102 and in turn the aircraft control surface 110 i.e. acting against the external load that resists the aircraft control surface 110 moving to the retracted position. Additionally, because the reduction ratio between the forcing element 108 and the aircraft control surface 110 is greater than 1, the forcing element 108 undergoes a larger displacement (in the present example, the displacement at the forcing element 108 is double that at the aircraft control surface 110 due to the reduction ratio being 2) but smaller force than the aircraft control surface 110, which further assists in overcoming the external load.

It will be understood that in order to move the aircraft control surface 110 from the retracted position to the deployed position the components move in the opposite directions to those described above. During this process, the external loads help to move the aircraft control surface 110 to the deployed position and the forcing element 108 again provides a force which opposes the external loads, which may assist in braking the aircraft control surface 110.

While this example relates to an actuator with a reduction ratio greater than 1, in some examples it may be beneficial to have a reduction ratio less than 1.

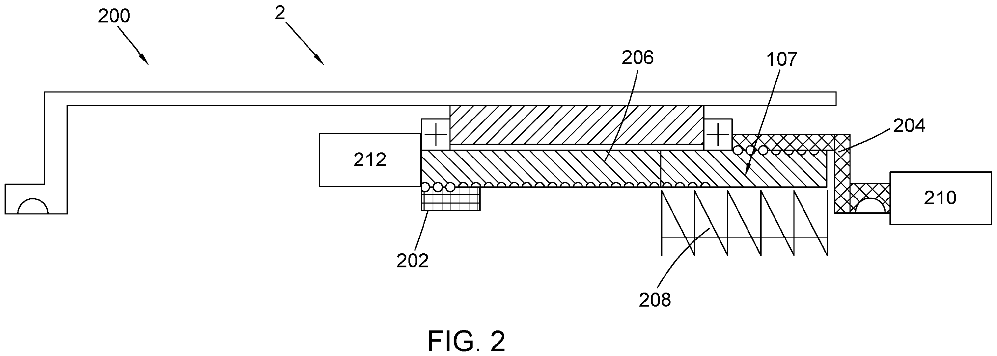

Fig. 2 shows a second actuator 200. The second actuator 200 comprises many of the same features as the first actuator 100, with description of common features between the first and second actuators 100 200 being omitted in the description of the second actuator 200 that follows and with only differences generally being described.

As for the first actuator 100, the second actuator 200 comprises a first movable element 202, a second movable element 204 and a third movable element 206, which engage with each other in the same manner (i.e. with the same leads, pitches and reduction ratios) as the corresponding components of the first actuator 100. Additionally, as in the first actuator 100, in the second actuator 200 the aircraft control surface engaging component 204 is the second movable element 204, the motor engaging component 206 is the third movable element 206 and the forcing element engaging component 202 is the first movable element 202.

A first difference between the first actuator 100 and the second actuator 200 is that in the second actuator 200 displacement of the third movable element 206 causes the first and second movable elements 202 204 to move in the same direction as each other. In the second actuator 200 this is achieved by the first and second movable elements 202 204 being threaded in the same directions.

A second difference between the first actuator 100 and the second actuator 200 is that in the second actuator 200 the forcing element 208 is configured to apply a force to the forcing element engaging component 202 (i.e. the first movable element 202) in the opposite direction (i.e. to the left in Fig. 2) to that of the first actuator 100. Because the forcing element engaging component 202 of the second actuator 200 moves in the opposite direction of that of the first actuator 100, applying a force in the opposing direction means that the forcing element engaging component 202 assists in overcoming the external load when moving the aircraft control surface 210 to the retracting position in use. To provide the force in the opposite direction the forcing element 208 is positioned on the right-hand side of the forcing element engaging component 202 in Fig. 2, with the forcing element 208 being held in place by the third movable element 206 (and with the spring 208 being compressed between the first movable element 202 and the end of the third movable element 206).

It will be understood that apart from the forcing element engaging component 202 (i.e. the first movable element 202) moving in the opposite direction to that of the first actuator 100, the second actuator 200 functions in the same manner as the first actuator 100 during movement of the aircraft control surface 210 between the deployed and retracted positions. The second actuator 200 again provides a beneficial reduction ratio between the forcing element 208 and the aircraft control surface 210.

In other examples similar to the second actuator 200, the forcing element may be between the first and second movable elements 202 204, with displacement of the forcing element caused by the relative displacement between the movable elements 202 204 (i.e. with the spring being compressed between the first and second movable elements 202 204).

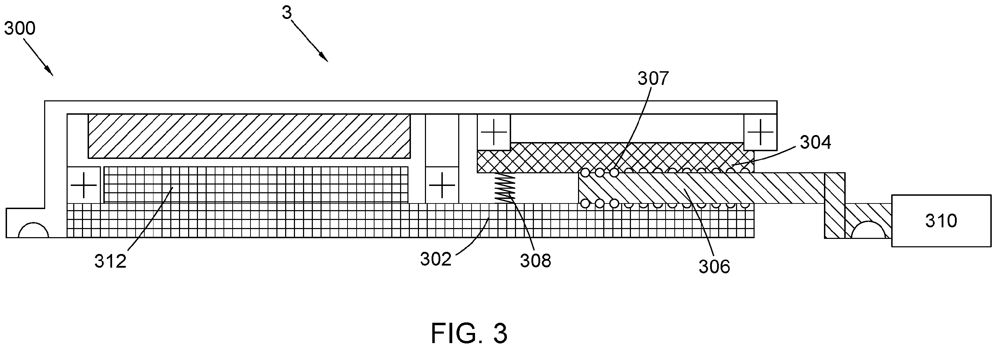

Fig. 3 shows a third actuator 300, which comprises a first movable element 302. The third actuator 300 comprises a second movable element 304. The third actuator 300 comprises a third movable element 306.

The third movable element 306 is in screw engagement with the first movable element 302 with a first lead. The third movable element 306 is in screw engagement with the second movable element 304 with a second lead.

In the third actuator 300, the first and second movable elements 302 304 comprise first and second threaded components respectively. The third movable element 306 comprises a roller screw 307 configured to engage the first and second threaded shafts to provide the screw engagement with each of the first and second movable elements 302 304. The first and second movable elements 302 304 are configured to move in opposing directions. Again, this is achieved by the first movable element 302 and the second movable element 304 being threaded in opposing directions. More specifically, the first moveable element 302 has a right-handed thread and the second movable element 304 has a left-handed thread. In this way, displacement of the third movable element 306 causes the first and second movable elements 302 304 to move in opposing directions.

In the third actuator 300, the first and second movable elements 302 304 are constrained such that linear displacement of the first and second movable elements 302 304 is prevented. Rotational displacement of the first and second movable elements 302 304 is permitted. The third movable element 306 is constrained such that rotational displacement of the third movable element 306 is prevented but linear displacement of the third movable element 306 is permitted.

Again, the third actuator 300 is comprised in an aircraft control system 3, which further comprises a motor 312 (which may be any suitable drive component) and an aircraft control surface 310.

One of the first, second and third movable elements 302 304 306 is a motor engaging component 302. In the third actuator 300, the motor engaging component 302 is the first movable element 302. The motor engaging component 302 is connected to the motor 312, such that rotation of the motor causes rotation of the first movable element 302.

One of the first, second and third movable elements 302 304 306 is an aircraft control surface engaging component 306. In the third actuator 300, the aircraft control surface engaging component 306 is the third movable element 306. The aircraft control surface engaging component 306 is connected to the aircraft control surface 310, such that displacement of the aircraft control surface engaging component 306 causes displacement of the aircraft control surface 310 in use.

The aircraft control surface 310 of the third actuator 300 is movable between the same positions under the same loads as that of the first actuator 100.

The third actuator 300 comprises a forcing element 308. In the third actuator 300, the forcing element 308 is a bias element 308, more specifically a spring 308, more specifically a torsion spring 308. In the third actuator 300, the forcing element 308 biases the aircraft control surface 310 (via the movable elements) against the external loads i.e. towards the deployed position.

One of the first, second and third movable elements 302 304 306 is a forcing element engaging component 302. In the third actuator 300, the forcing element engaging component 304 is the first movable element 302. The forcing element 308 is configured to apply a force to the forcing element engaging component 302. In the third actuator 300 the forcing element engaging component 302 is also the motor engaging component 302.

In the third actuator 300 the forcing element 308 is connected between the first and second movable elements 302 304, such that the forcing element 308 is configured to apply the force to the second movable element 304 when there is relative displacement between the first and second movable elements 304. In particular, the forcing element 308 applies a torque to the first movable element 302 when there is relative rotation between the first and second movable elements 304.

The first lead is different from the second lead. More specifically, in the first actuator 300, the first lead is similar but not identical to the second lead. This provides a reduction ratio for the actuator. In the third actuator 300, the reduction ratio is less than 1, as explained below.

In the third actuator 300, in order to provide different leads the first movable element 102 and the second movable element 104 are threaded with different pitches. More specifically, the first movable element 102 has a first pitch that is less than a second pitch of the second movable element 304. The first lead and the second lead are similar to each other, which provides a small reduction ratio, which is less than 1.

In the case of the third actuator 300 the reduction ratio may be defined as the ratio of angular displacement of the first movable element 302 (which corresponds to the angular displacement of the motor engaging component 302 and the motor 312) to the relative rotation between the first and second movable elements 302 304 (which corresponds to the angular displacement of the forcing element 308). The reduction ratio is therefore the ratio of angular displacement of the motor 312 to the angular displacement of the torsion spring 308.

In examples, | first lead - second lead | / second lead < 0.5. In examples, | first lead - second lead | / second lead < 0.4. In examples, | first lead - second lead | / second lead < 0.3. In examples, | first lead - second lead | / second lead < 0.2. In examples, | first lead - second lead | / second lead < 0.1. In the third actuator 300, | first lead - second lead | / second lead is substantially 0.09.

For example, in the third actuator 300, | first lead - second lead | / second lead is substantially 0.9. This means that when the motor 312 performs 7 rotations (i.e. 2520°), the first movable element 302 rotates through 2520° and the second movable element 304 rotates through 2400°, which gives a relative rotation between the first and second movable elements of 120°. This corresponds to a reduction ratio of 120/2520, which is substantially 0.05.

In contrast to the first actuator 100, the small reduction ratio of the third actuator 300 reduces the displacement and increases the load on the forcing element 308 in comparison to those at the aircraft control surface 310. This may be beneficial in particular applications of aircraft control surface 310 or when sizing a particular type of forcing element 308, for example a torsion spring.

In use, in order to move the aircraft control surface 310 from the deployed position to the retracted position the motor 312 rotates, which in turn causes rotation of the motor engaging component 302 (i.e. the first movable element 302). Rotation of the motor engaging component 302 (i.e. the first movable element 302) causes linear movement (to the left in figure 3) of the aircraft control surface engaging component 306 (i.e. the third movable element 306), which causes movement of the aircraft control surface 310 towards the retracted position.

At the same time, the linear movement of the third movable element 306 causes rotation of the second movable element 304. As described above, the difference in leads between the first and second movable elements 302 304 means that there is a small relative angular displacement between the first and second movable elements 302 304, which causes a small angular displacement of the forcing element 308 (i.e. the torsion spring 308). The forcing element 308 therefore applies a torque to the forcing element engaging component 302 (i.e. the first movable element 302), which assists in overcoming the external load on the aircraft control surface 310.

It will be understood that in order to move the aircraft control surface 310 from the retracted position to the deployed position the components move in the opposite directions to those described above. During this process, the external loads help to move the aircraft control surface 310 to the deployed position and the forcing element 308 again provides a force which opposes the external loads, which may assist in braking the aircraft control surface 310.

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. An actuator for an aircraft control surface, the actuator comprising:
first, second and third movable elements, wherein the third movable element is in screw engagement with the first movable element with a first lead, wherein the third movable element is in screw engagement with the second movable element with a second lead, wherein the first lead is different from the second lead to provide a reduction ratio for the actuator;
wherein a motor engaging component of the first, second and third movable elements is connectable to a motor such that the motor rotates the first component in use,
wherein an aircraft control surface engaging component of the first, second and third moveable elements is connectable to the aircraft control surface to move the aircraft control surface on rotation of the motor engaging component in use.

2. An actuator according to claim 1 and further comprising a forcing element configured to apply a force to a forcing element engaging component of the first, second and third moveable elements.

3. An actuator according claim 2, wherein the forcing element engaging component is the first movable element.

4. An actuator according to claim 3, wherein the forcing element is configured to apply a force between the first movable element and one of the second and third movable elements.

5. An actuator according to claim 3, wherein the forcing element is configured to apply a force between the first movable element and a stator.

6. An actuator according to any of claims 2 to 5, wherein the forcing element is a bias element.

7. An actuator according to claim 6, wherein the bias element is configured such that the aircraft control surface is biased towards a retracted position, wherein an external load in use forces the aircraft control surface towards a deployed position.

8. An actuator according to any preceding claim, wherein the first movable element comprises a first threaded component and the second movable element comprises a second threaded component to provide the screw engagement.

9. An actuator according to claim 8, wherein the first threaded component and the second threaded component are threaded in the same direction.

10. An actuator according to claim 8, wherein the first threaded component and the second threaded component are threaded in opposing directions.

11. An actuator according to any preceding claim, wherein the third movable element is in roller screw engagement with the first and second movable elements.

12. An actuator according to any preceding claim, wherein the motor engaging component is the third movable element and the aircraft control surface engaging component is the second movable element.

13. An actuator according to any of claims 1 to 11, wherein the motor engaging component is the first movable element and the aircraft control surface engaging component is the third movable element.

14. An actuator according to claim 13, wherein the first lead and the second lead are similar but not identical.

15. An aircraft control system comprising:
the actuator according to any preceding claim;
a motor connected to the motor engaging component; and
an aircraft control surface connected to aircraft control surface engaging component.
